# EUROPÄISCHE PATENTSCHRIFT

(11) **EP 1 002 409 B1**
(45) Veröffentlichungstag und Bekanntmachung des Hinweises auf die Patenterteilung: **22.10.2003**
(21) Anmeldenummer: 98947388.9
(22) Anmeldetag: 06.08.1998
(51) Int. Cl.: H04L 29/06, G06F 17/30, G06F 9/445

(54) **VERFAHREN ZUM LADEN EINER FUNKTION, DIE VON EINEM ERSTEN RECHNER (SERVER) BEREITGESTELLT WIRD, AUF EINEN ZWEITEN RECHNER (CLIENT)**
METHOD FOR LOADING A FUNCTION PROVIDED BY A FIRST COMPUTER (SERVER) ONTO A SECOND COMPUTER (CLIENT)
PROCEDE POUR CHARGER DANS UN SECOND ORDINATEUR (CLIENT) UNE FONCTION MISE A DISPOSITION PAR UN PREMIER ORDINATEUR (SERVEUR)

(30) Priorität: 07.08.1997 DE 19734229
(43) Veröffentlichungstag der Anmeldung: 24.05.2000
(73) Patentinhaber: SIEMENS AKTIENGESELLSCHAFT, 80333 München (DE)
(72) Erfinder: SCHÄFER, Ralf, D-72175 Dornhan (DE); GITSELS, Martin, D-81371 München (DE)
(86) Internationale Anmeldenummer: DE9802265
(87) Internationale Veröffentlichungsnummer: WO99008419

(56) Entgegenhaltungen:
- US-A- 4 724 521

## Beschreibung

Die Erfindung betrifft ein Verfahren zum Laden einer Funktion, die von einem ersten Rechner (Server) bereitgestellt wird, auf einen zweiten Rechner (Client), wobei der erste Rechner und der zweite Rechner über ein Netz verbunden sind.

Ein solches system bzw. Verfahren ist aus US-A-4 724 521 bekannt, wobei ein auf einem externen Rechner bereitgestelltes Programm auf einen Lokalen Rechnen zur Bearbeitung übertragen werden kann.

Ein Netz bezeichnet ein Medium, über das Rechner miteinander verbunden sind und über das Nachrichten zwischen den Rechner, sei es verbindungslos oder verbindungsorientiert, ausgetauscht werden. Beispiele für solche Netze sind Rechnernetze und Kommunikationsnetze.

Mit Funktion wird eine Komponente bezeichnet, die auf einem zweiten Rechner benötigt und auf einem ersten Rechner zur Verfügung gestellt wird. Derartige Funktionen können beispielsweise Programme, die über das Netz von dem ersten Rechner geladen werden sollen, Prozeduren im Verständnis einer strukturierten Programmiersprache oder Methoden im objektorientierten Sinn sein.

Die Programmiersprache JAVA ist dem Fachmann hinlänglich bekannt. Ein wichtiges Merkmal von JAVA ist seine Unabhängigkeit von einer bestimmten Plattform (plattformunabhängig). JAVA läuft auf jedem System, auf dem eine JAVA-Virtual-Machine implementiert ist. Diese JAVA-Virtual-Machine übernimmt die Ausführung des JAVA-Programms, wobei eine kontrollierte Übertragung mit anschließender Integritätsüberprüfung des geladenen Codes erfolgen kann. Ein JAVA-Applet bezeichnet eine in JAVA geschriebene Applikation, die auf Netzbrowsern ausgeführt wird und somit auf der in dem Netzbrowser integrierten JAVA-Virtual-Machine läuft. Allgemein ist jedes JAVA-Applet auch ein JAVA-Programm.

Da, wie erwähnt, für ein ablauffähiges JAVA-Programm (z.B. ein JAVA-Applet) eine JAVA-Virtual-Machine notwendig ist, sind deutliche Laufzeiteinbußen im Vergleich zu einem eigens für den jeweiligen Rechner geschriebenen Programm (plattformabhängig) hinzunehmen. JAVA-Bytecode bezeichnet einen Programmcode, der plattformunabhängig auf jedem Rechner, der über eine JAVA-Virtual-Machine verfügt, ablaufen kann. Der JAVA-Bytecode ist in JAVA-Class-Files integriert, die weitere für die JAVA-Virtual-Machine nützliche Information bereitstellen, insbesondere eine Semantik für die Umgebung der JAVA-Virtual-Machine beinhalten.

Demzufolge kann unterschieden werden in plattformabhängige, d.h. für den jeweiligen Rechner spezifizierte, und plattformunabhängige, d.h. unabhängig von dem speziellen Rechner lauffähige, Programme. Mittels eines plattformabhängigen Programms ist der Einsatz von Programmcode (auch: Code) möglich, der spezielle Hardwaremerkmale des jeweiligen Rechners ausnutzt. Damit ist ein signifikanter Laufzeitgewinn bei Programmausführung verbunden.

In existierenden Systemen, die verschiedene Rechner miteinander über plattformunabhängige Programme (z.B. JAVA) verbinden, ist es von Nachteil, daß ein plattformunabhängiges Programm deutliche Laufzeiteinbußen mit sich bringt, wohingegen bei auf spezielle Hardware, insbesondere Multimedia-Hardware, abgestimmter Programmcode immense Laufzeitvorteile mit sich brächte.

Die Aufgabe der Erfindung besteht darin, ein Verfahren zum Laden einer Funktion von einem ersten Rechner auf einen zweiten Rechner anzugeben, wobei die oben erwähnten Nachteile vermieden werden.

Diese Aufgabe wird gemäß den Merkmalen des Patentanspruchs 1 gelöst.

Das erfindungsgemäße Verfahren ermöglicht das Laden einer Funktion, die von einem ersten Rechner (Server) bereitgestellt wird, auf einen zweiten Rechner (Client), wobei der erste Rechner und der zweite Rechner über ein Netz verbunden sind. Dazu wird von dem zweiten Rechner über das Netz bei dem ersten Rechner angefragt, ob die Funktion in einem plattformabhängigen Code verfügbar ist. Falls ein plattformabhängiger Code nicht verfügbar ist, wird ein plattformunabhängiger Code der Funktion von dem ersten Rechner geladen und das Verfahren wird beendet. Ansonsten (der plattformabhängige Code ist verfügbar) wird zunächst überprüft, ob dieser plattformabhängige Code der Funktion schon auf dem zweiten Rechner vorhanden ist und, so dies der Fall ist, wird dieser plattformabhängige Code geladen und das Verfahren beendet. Ist hingegen der plattformabhängige Code auf dem zweiten Rechner nicht vorhanden, so wird mittels einer Eingabe entschieden, ob der plattformabhängige Code vom ersten Rechner geladen werden soll. Ergibt sich aus der Eingabe, daß der plattformabhängige Code nicht geladen werden soll, wird der plattformunabhängige Code geladen und das Verfahren beendet. Wird mittels der Eingabe entschieden, daß der plattformabhängige Code geladen werden soll, so wird nach einer Verhandlung zwischen dem ersten Rechner und dem zweiten Rechner der plattformabhängige Code der Funktion auf den zweiten Rechner geladen.

Eine Weiterbildung der Erfindung besteht darin, daß die Verhandlung folgende Schritte umfaßt:
Der zweite Rechner fordert von dem ersten Rechner eine Liste aller verfügbaren plattformabhängigen Realisierungen der Funktion an. Diese Liste wird von dem ersten Rechner an den zweiten Rechner übertragen. Der zweite Rechner wählt eine geeignete Realisierung aus, teilt dies dem ersten Rechner mit und fordert eine Übertragung dieser Realisierung der Funktion an. Dadurch wird sichergestellt, daß eine passende plattformabhängige Realisierung zu dem zweiten Rechner übertragen wird. Hierbei sei angemerkt, daß eine solche plattformabhängige Realisierung insbesondere ein für die jeweilige Plattform erstelltes Programm oder ein für die jeweilige Plattform kompilierter Object-Code sein kann.

Eine andere Weiterbildung besteht darin, daß nach dem Laden plattformabhängigen Codes von dem ersten Rechner auf den zweiten Rechner eine Sicherheitsüberprüfung dieses plattformabhängigen Codes durchgeführt wird. Dabei kann diese Sicherheitsüberprüfung dadurch erfolgen, daß, ehe der geladene plattformabhängige Code auf dem zweiten Rechner ausgeführt wird, eine Integritätsprüfung dieses Codes erfolgt, vorzugsweise mittels eines Virensuchprogramms.

Im Rahmen einer zusätzlichen Weiterbildung ist es möglich die Eingabe auf eine der folgenden Arten durchzuführen:
a) Ein Benutzer gibt an, ob er den plattformabhängigen Code von dem ersten Rechner laden will. Hierbei kann der Benutzer die Entscheidung treffen und das Risiko eingehen, korrupten, also fehlerhaften oder mit beispielsweise. Viren behafteten, Code von dem ersten Rechner zu empfangen.
b) Die Eingabe erfolgt automatisiert dadurch, daß eine Liste auf dem zweiten Rechner gehalten wird, die Kennungen von Rechnern enthält, die in einer sicheren Umgebung stehen (Trusted Servers).
c) Die Eingabe ist dauerhaft auf *"Laden von plattformabhängigen Code"* eingestellt, wenn der erste Rechner keine sicherheitsrelevanten Daten und/oder Programme enthält. Dies ist vorzugsweise bei speziell dafür vorgesehenen Netzwerkcomputern der Fall. Generell ist von Vorteil, wenn die geladenen Funktionen nur für die zeitlich begrenzte Sitzung benötigt werden, der zweite Rechner nach der Sitzung ausgeschaltet wird und/oder die über das Netz erhaltenen Daten nicht persistent abspeichert.

Auch ist es eine Weiterbildung, daß es sich bei dem plattformunabhängigen Code um JAVA-Bytecode, der in JAVA-Class-Files integriert ist, handelt.

Weiterbildungen der Erfindung ergeben sich auch aus den abhängigen Ansprüchen.

Anhand der folgenden Figuren werden Ausführungsbeispiele der Erfindung näher dargestellt.

Es zeigen
- Fig.1: ein System aus verteilten Rechnern mit plattform-abhängigen und plattformunabhängigen Funktionen,
- Fig.2: ein Blockdiagramm für ein Verfahren zum Laden einer Funktion in plattformabhängigen oder plattformunabhängigem Code,
- Fig.3: ein Ablaufdiagramm für eine Verhandlung darüber, welche Realisierung einer Funktion in plattform-abhängigem Code geladen werden soll.

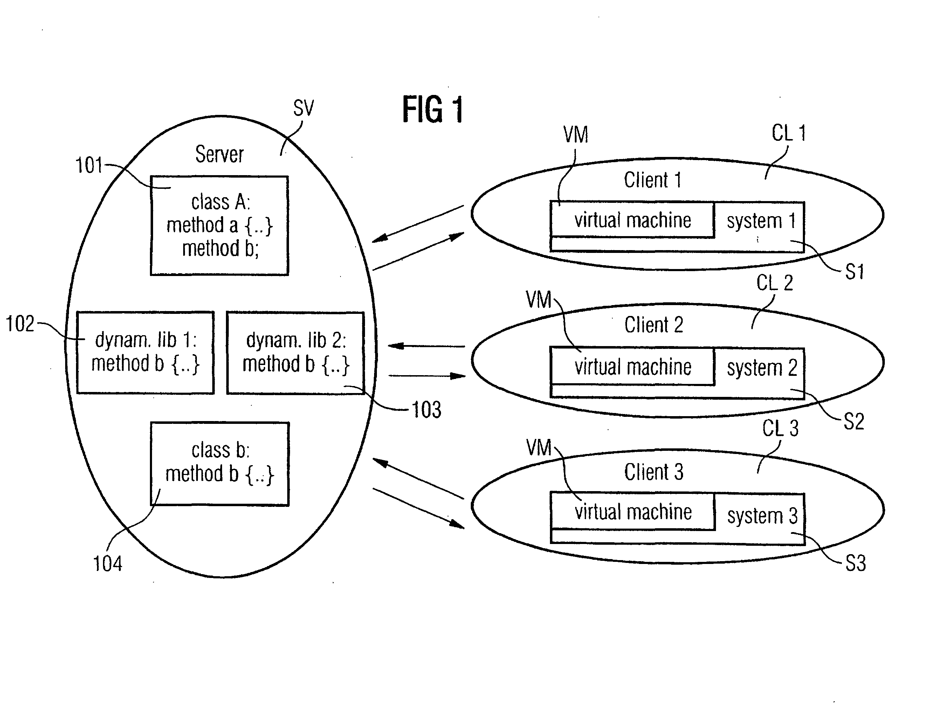

Die in Fig.1 dargestellte Konfiguration stellt ein Client-/Server-System dar. Die Rechner CL1, CL2 und CL3 (Clients) wollen eine, vorzugsweise in JAVA geschriebene, Applikation auf deren Virtual-Machine VM ausführen. Die drei dargestellten Rechner CL1, CL2 und CL3 verfügen jeweils über unterschiedliche Betriebssysteme S1, S2 und S3, wobei auf jedem dieser Betriebssysteme eine Virtual-Machine VM läuft, die ihrerseits sicherstellt, daß plattformunabhängige JAVA-Class-Files, der für diese Virtual-Machine VM bestimmt ist, auf jedem der Rechner CL1, CL2 und CL3 ausgeführt werden kann. Handelt es sich bei den JAVA-Programmen um JAVA-Applets, so ist ein Netzbrowser aktiv. Auf dem Server SV ist eine Klasse A mit einer plattformunabhängigen Implementierung einer Methode a enthalten (siehe Block 101).

Hierbei sein angemerkt, daß der Begriff "Methode" im Sinne der objektorientierten Programmierung verwendet wird, womit eine Prozedur oder Funktion bezeichnet ist, die mit einer Klasse assoziiert ist und als Reaktion auf eine Botschaft aufgerufen wird. Dabei ist eine Botschaft eine Aufforderung an ein Objekt, eine seiner Methoden auszuführen. Weitergehende Definitionen und Erläuterungen zur objektorientierten Programmierung mit den dort bevorzugten Begriffen sind dem Fachmann hinlänglich bekannt.

Die Implementation der Methode a in plattformunabhängigem Code, vorzugsweise in JAVA-Bytecode und nicht in plattformabhängigem Code bedeutet einen plattformübergreifenden Einsatz der Methode a in allen Rechnern CL1, CL2 und CL3 mit einer entsprechenden Virtual-Machine VM, wobei mit Verwendung der Virtual-Machine VM Laufzeiteinbußen in Kauf genommen werden.

Eine zweite Methode b ist innerhalb der Klasse A 101 lediglich deklariert; definiert wird die Methode b außerhalb der Klasse A auf drei verschiedene Arten:
1. In Form einer plattformabhängigen Bibliothek 102, die für das Betriebssystem S1 bestimmt ist;
2. als plattformabhängige Bibliothek 103, die für das Betriebssystem S2 bestimmt ist;
3. als eine plattformunabhängige Methode innerhalb einer Klasse b (siehe Block 104).

Fordert der Rechner CL1 Code für die Methode b an, so lädt er bisher die Klasse b und führt den verhältnismäßig langsamen Bytecode aus, auch wenn der Rechner CL1 zur Durchführung der der Methode b zugrundeliegenden Funktionalität vorzugsweise über spezielle Multimedia-Hardware verfügt.

Um es zu ermöglichen, speziellen plattformabhängigen und auf Laufzeit optimierten Code in dem jeweiligen Rechner (hier der Rechner CL1) nutzen zu können, wird die Methode b in der Klasse A als "native" deklariert. Somit erfährt der Rechner CL1, daß die Methode b auch in plattformabhängigem Code auf dem Server SV verfügbar ist. Der Rechner CL1 lädt eine plattformabhängige Repräsentation der Methode b, falls diese speziell für seine Plattform, das Betriebssystem S1, verfügbar ist, von dem Server SV (im Beispiel von Fig.1 entspricht dieser Repräsentation der Block 102). Damit erhält der Rechner CL1 eine speziell auf die Hardware dieses Rechners CL1 abgestimmte und weniger laufzeitintensive Version der Methode b. Vorzugsweise führt der Rechner CL1 über eine vorgegebene Schnittstelle (JAVA-Native-Interface) die Methode b in der JAVA-Umgebung aus.

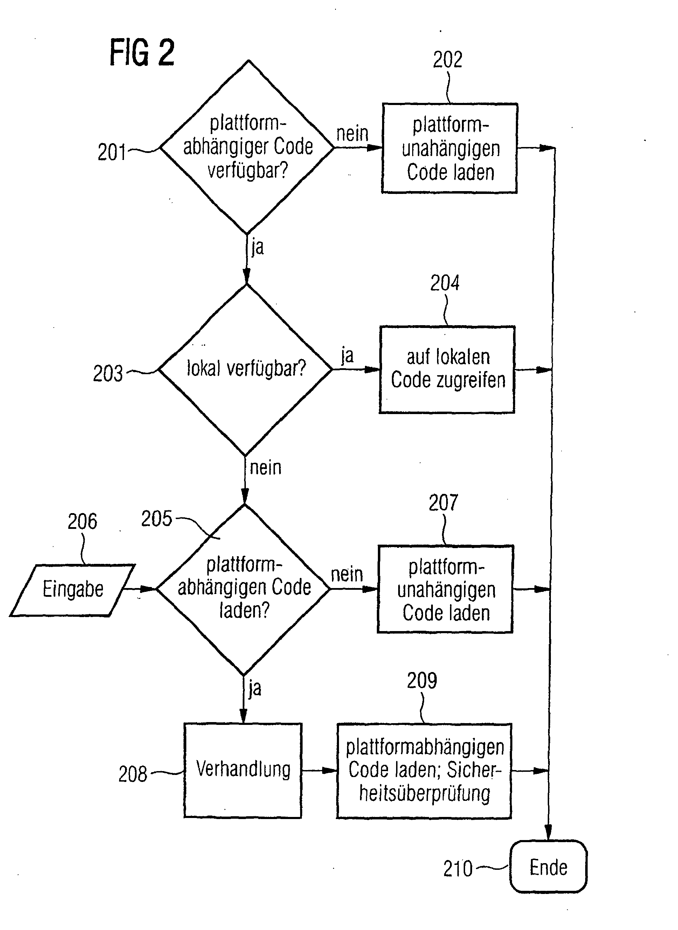

Die Anfrage eines Rechners CL1, CL2 oder CL3 beim Server SV, ob ein plattformabhängiger Code auf dem Server SV verfügbar sei und ob dieser ggf. auch auf den jeweiligen Rechner CL1, CL2 oder CL3 geladen werden soll, ist detailliert in Fig.2 dargestellt.

In einem Schritt 201 fragt der Rechner CL1 an, ob plattformabhängiger Code auf dem Server SV verfügbar sei. Ist dies nicht der Fall, wird plattformunabhängiger Code geladen (siehe Schritt 202 bzw. Block 104 in Fig.1 für eine plattformunabhängige Repräsentation der Methode b). Ist hingegen plattformabhängiger Code auf dem Server SV verfügbar, so wird in einem Schritt 203 festgestellt, ob auf dem jeweiligen Rechner CL1 der entsprechende plattformabhängige Code schon lokal verfügbar ist. In solch einem Fall wird in einem Schritt 204 auf den lokal verfügbaren Code zugegriffen. Dies kann beispielsweise durch entsprechende Zwischenspeicherung (Cache-Speicher) gewährleistet werden.

Ist plattformabhängiger Code auf dem Server SV verfügbar, aber lokal auf dem Rechner CL1 nicht verfügbar, so wird in einem Schritt 205 entschieden, ob plattformabhängiger Code von dem Server SV auf den Rechner CL1 geladen werden soll.

Als Entscheidungshilfe dient eine Eingabe 206, durch die der Benutzer festlegen kann, ob er plattformabhängigen Code von speziell diesem Server SV laden will. Eine andere mögliche Eingabe ist eine Liste, die Kennzeichnungen von Servern enthält, die als vertrauenswürdig (Trusted Servers) gelten. Von solchen Servern kann ohne Sicherheitsrisiko plattformabhangiger Code geladen werden. Eine weitere Möglichkeit für eine Eingabe ist es, immer plattformabhängigen Code von einem Server zu laden. Diese Strategie eignet sich v.a. dann, wenn der Rechner CL1 ein reiner Netzwerkrechner ist und/oder keine sicherheitsrelevanten Daten und/oder Programme enthält.

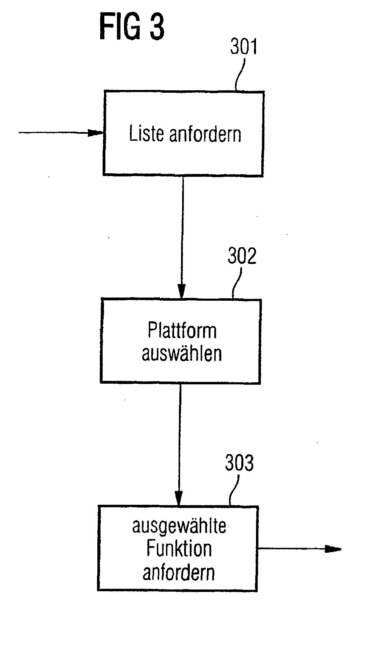

Wird davon ausgegangen, daß aufgrund der Eingabe 206 kein plattformabhängiger Code von dem Server SV geladen werden soll, so wird in einem Schritt 207 plattformunabhängiger Code (siehe wieder Bock 104 in Fig.1) geladen. Soll hingegen plattformabhängiger Code geladen werden, so wird in einem Schritt 208 eine Verhandlung über die Art des zu ladenden Codes (siehe auch Beschreibung zu Fig.3) durchgeführt und in einem Schritt 209 der plattformabhängige Code geladen. Plattformabhängiger Code für den Rechner CL1 ist in Fig.1 durch den Block 102 angedeutet. Bevor der plattformabhängige Code auf dem Rechner CL1 ausgeführt wird, wird vorzugsweise eine Sicherheitsüberprüfung dieses neu geladenen Codes durchgeführt. Dies geschieht vorzugsweise mit speziellen Programmen, die die Integrität des geladenen Codes sicherstellen, vorzugsweise mittels eines Virensuchprogramms. Das Verfahren terminiert in einem Schritt 210.

Wie in Fig.2 angesprochen, wird in Fig.3 der Schritt 208 aus Fig.2 eingehend erläutert.

Die Verhandlung des Rechners CL1 mit dem Server SV erfolgt derart, daß der Rechner CL1 von dem Server SV eine Liste aller verfügbaren plattformabhängigen Realisierungen der Methode b anfordert (siehe Schritt 301). Die Liste wird von dem Server SV an den Rechner CL1 übertragen. In einem Schritt 302 wählt der Rechner CL1 eine für sein Betriebssystem S1 geeignete Realisierung der Methode b aus, teilt dies dem Server SV mit und fordert eine Übertragung der entsprechenden plattformabhängigen Realisierung der Methode b (siehe Block 102 in Fig.1) in einem Schritt 303 an.

## Patentansprüche

1. Verfahren zum Laden einer Funktion (101,102,103,104), die von einem ersten Rechner (Server SV) bereitgestellt wird, auf einen zweiten Rechner (Client 1, CLIENT2, CLIENT3)),
wobei der erste Rechner (SV) und der zweite Rechner (CL1,CL2,CL3) über ein Netz verbunden sind, in folgenden Schritten:
a) von dem zweiten Rechner (CL1,CL2,CL3) wird über das Netz bei dem ersten Rechner (SV) angefragt, ob die Funktion in einem plattformabhängigen Code verfügbar ist;
b) falls ein plattformabhängiger Code nicht verfügbar ist, wird ein plattformunabhängiger Code der Funktion von dem ersten Rechner (SV) geladen und das Verfahren beendet;
c) ansonsten werden folgende Schritte durchgeführt:
• es wird überprüft, ob der plattformabhängige Code der Funktion auf dem zweiten Rechner (CL1,CL2,CL3) vorhanden ist und, wenn dies der Fall ist, wird der plattformunabhängige Code geladen und das Verfahren beendet;
• falls der plattformabhängige Code auf dem zweiten Rechner (CL1,CL2,CL3) nicht vorhanden ist, wird mittels einer Eingabe entschieden, ob der plattformabhängige Code vom ersten Rechner (SV) geladen werden soll:
- wird mittels der Eingabe entschieden, daß der plattformabhängige Code nicht geladen werden soll, wird der plattformunabhängiger Code geladen und das Verfahren beendet;
- wird mittels der Eingabe entschieden, daß der plattformabhängige Code geladen werden soll, so wird nach einer Verhandlung zwischen dem ersten Rechner (SV) und dem zweiten Rechner (CL1,CL2,CL3) der plattformabhängige Code der Funktion auf den zweiten Rechner geladen.

2. Verfahren nach Anspruch 1,
bei dem die Verhandlung folgende Schritte umfaßt:
a) der zweite Rechner (Client) fordert von dem ersten Rechner (Server) eine Liste aller verfügbarer plattformabhängiger Realisierungen der Funktion an;
b) die Liste wird von dem ersten Rechner an den zweiten Rechner übertragen;
c) der zweite Rechner wählt eine geeignete Realisierung aus, teilt dies dem ersten Rechner mit und fordert eine Übertragung dieser Realisierung der Funktion an.

3. Verfahren nach Anspruch 1 oder 2,
bei dem nach dem letzten Schritt, dem Laden des plattformabhängigen Codes von dem ersten Rechner auf den zweiten Rechner, eine Sicherheitsüberprüfung dieses plattformabhängigen Codes durchgeführt wird.

4. Verfahren nach Anspruch 3,
bei dem die Sicherheitsüberprüfung folgende Maßnahme umfaßt:
bevor der geladene plattformabhängige Code auf dem zweiten Rechner ausgeführt wird, erfolgt eine Integritätsprüfung des Codes, vorzugsweise mittels eines Virensuchprogramms.

5. Verfahren nach einem der vorhergehenden Ansprüche,
bei dem die Eingabe auf eine der folgenden Arten vorgenommen wird:
a) ein Benutzer gibt an, ob er plattformabhängigen Code von dem ersten Rechner laden will;
b) anhand einer Liste, die Rechner einer sicheren Umgebung umfaßt;
c) es wird immer plattformabhängiger Code geladen, wenn der erste Rechner keine sicherheitsrelevanten Daten und/oder Programme enthält.

6. Verfahren nach einem der vorhergehenden Ansprüche,
bei dem der plattformunabhängige Code JAVA-Bytecode ist.

## Claims

1. Method for loading a function (101, 102, 103, 104) provided by a first computer (Server SV) onto a second computer (Client 1, Client 2, Client 3),
where the first computer (SV) and the second computer (CL1, CL2, CL3) are connected via a network, in the following steps:
a) the second computer (CL1, CL2, CL3) uses the network to ask the first computer (SV) whether the function is available in a platform-dependent code;
b) if a platform-dependent code is not available, a platform-independent code for the function is loaded from the first computer (SV) and the method is ended;
c) otherwise, the following steps are carried out:
• a check is performed to determine whether the platform-dependent code for the function exists on the second computer (CL1, CL2, CL3) and, if this is the case, the platform-independent code is loaded and the method is ended;
• if the platform-dependent code does not exist on the second computer (CL1, CL2, CL3), an input is used to decide whether the platform-dependent code needs to be loaded from the first computer (SV):
- if the input is used to decide that the platform-dependent code does not need to be loaded, the platform-independent code is loaded and the method is ended;
- if the input is used to decide that the platform-dependent code needs to be loaded, then after negotiation between the first computer (SV) and the second computer (CL1, CL2, CL3) the platform-dependent code for the function is loaded onto the second computer.

2. Method according to Claim 1,
in which the negotiation comprises the following steps:
a) the second computer (Client) asks the first computer (Server) for a list of all available platform-dependent implementations of the function;
b) the list is transmitted from the first computer to the second computer;
c) the second computer selects a suitable implementation, notifies the first computer of this and requests transmission of this implementation of the function.

3. Method according to Claim 1 or 2,
in which the last step, loading of the platform-dependent code from the first computer onto the second computer, is followed by the performance of a security check on this platform-dependent code.

4. Method according to Claim 3,
in which the security check comprises the following measure:
before the loaded platform-dependent code on the second computer is executed, there is an integrity check on the code, preferably using a virus checker program.

5. Method according to one of the preceding claims,
in which the input is made in one of the following ways:
a) a user indicates whether he wishes to load platform-dependent code from the first computer;
b) using a list which comprises computers in a secure environment;
c) platform-dependent code is always loaded if the first computer does not contain any security-related data and/or programs.

6. Method according to one of the preceding claims, in which the platform-independent code is JAVA bytecode.

## Revendications

1. Procédé pour charger une fonction (101, 102, 103, 104), qui est mise à disposition par un premier ordinateur (serveur SV), sur un deuxième ordinateur (client1, client 2, client 3), le premier ordinateur (SV) et le deuxième ordinateur (CL1, CL2, CL3) étant reliés par l'intermédiaire d'un réseau, au cours des étapes suivantes:
a) le deuxième ordinateur (CL1, CL2, CL3) demande, par l'intermédiaire du réseau, au premier ordinateur (SV) si la fonction est disponible dans un code dépendant de la plate-forme;
b) si un code dépendant de la plate-forme n'est pas disponible, on charge, à partir du premier ordinateur (SV), un code de la fonction indépendant de la plate-forme et le processus est terminé;
c) sinon, on exécute les étapes suivantes:
• on vérifie si le code de la fonction dépendant de la plate-forme existe sur le deuxième ordinateur (CL1, CL2, CL3) et, si c'est le cas, le code dépendant de la plate-forme est chargé et le processus est terminé;
• si le code de la fonction dépendant de la plate-forme n'existe pas sur le deuxième ordinateur (CL1, CL2, CL3), on décide, au moyen d'une saisie, si le code dépendant de la plate-forme doit être chargé à partir du premier ordinateur (SV):
- si on décide, au moyen de la saisie, que le code dépendant de la plate-forme ne doit pas être chargé, le code indépendant de la plate-forme est chargé et le processus est terminé;
- si on décidé, au moyen de la saisie, que le code dépendant de la plate-forme doit être chargé, le code de la fonction dépendant de la plate-forme est chargé sur le deuxième ordinateur après une négociation entre le premier ordinateur (SV) et le deuxième ordinateur (CL1, CL2, CL3).

2. Procédé selon la revendication 1
dans lequel la négociation comprend les étapes suivantes:
a) le deuxième ordinateur (serveur) requiert du premier ordinateur (serveur) une liste de toutes les réalisations disponibles de la fonction qui dépendent de la plate-forme;
b) la liste est transmise par le premier ordinateur au deuxième ordinateur;
c) le deuxième ordinateur choisit une réalisation adéquate, en informe le premier ordinateur et requiert une transmission de cette réalisation de la fonction.

3. Procédé selon la revendication 1 ou 2
dans lequel, après la dernière étape, le chargement du code dépendant de la plate-forme à partir du premier ordinateur sur le deuxième ordinateur, on exécute une vérification de sécurité de ce code dépendant de la plate-forme.

4. Procédé selon la revendication 3
dans lequel la vérification de sécurité comprend la mesure suivante:
avant que le code dépendant de la plate-forme, qui a été chargé, ne soit exécuté sur le deuxième ordinateur, on procède à un contrôle d'intégrité du code, de préférence au moyen d'un programme de recherche de virus.

5. Procédé selon l'une des revendications précédentes,
dans lequel la saisie est effectuée de l'une des manières suivantes:
a) un utilisateur indique s'il veut charger le code dépendant de la plate-forme à partir du premier ordinateur;
b) à l'aide d'une liste qui énumère les ordinateurs ayant un environnement sûr;
c) on charge toujours le code dépendant de la plate-forme lorsque le premier ordinateur ne renferme aucune donnée et/ou aucun programme qui sont essentiels pour la sécurité.

6. Procédé selon l'une des revendications précédentes,
dans lequel le code indépendant de la plate-forme est un code d'octets JAVA.
